Europäisches Patentamt

European Patent Office

Office européen des brevets

(11) Veröffentlichungsnummer: **0 088 829**

**A2**

## (12) EUROPÄISCHE PATENTANMELDUNG

(21) Anmeldenummer: **82111506.0**

(22) Anmeldetag: **11.12.82**

(51) Int. Cl.³: **F 03 B 17/02**

(30) Priorität: **24.12.81 DE 3151258**

(43) Veröffentlichungstag der Anmeldung:
**21.09.83 Patentblatt 83/38**

(84) Benannte Vertragsstaaten:
**AT BE CH DE FR GB IT LI LU NL SE**

(71) Anmelder: **Lang, Franz**
**Kenzinger Strasse 36**
**D-7833 Endingen a. K.(DE)**

(72) Erfinder: **Lang, Franz**
**Kenzinger Strasse 36**
**D-7833 Endingen a. K.(DE)**

(74) Vertreter: **Patentanwälte Dipl.-Ing. Hans Schmitt**
**Dipl.-Ing. Wolfgang Maucher**
**Dreikönigstrasse 13**
**D-7800 Freiburg i.Br.(DE)**

(54) **Motor mit exzentrisch verstellbaren Antriebskörpern.**

(57) Ein Motor besitzt im Takt der Drehbewegung exzentrisch verstellbare Antriebskörper, die an oder innerhalb mindestens eines Drehkörpers angeordnet sind, wobei Flüssigkei an den exzentrisch weiter vorstehenden Antriebskörpern od. dgl. angreift und den oder die Drehkörper in Drehung versetzt. Dabei sind als Antriebskörper unterhalb eines Flüssigkeitsspiegels befindliche Hohlkörper (7) vorgesehen, die über Zu- und Ableitungen (2, 27) mit einem Auftriebsgas steuerbar füll- sowie entleerbar sind. Das bei den einzelnen Hohlkörpern wirksame Auftriebsgas bzw. dessen Rückfluß werden dementsprechend so gesteuert, daß eine Auftriebskraft laufend an einer Seite des Drehkörpers wirksam wird und dadurch eine Umlaufbewegung hervorruft. Das notwendige Volumen für das Auftriebsgas kann man über dessen Erwärmung, z.B. mittels vorhandener Abgaswärme erzeugen.

./...

EP 0 088 829 A2

Fig.1

PATENTANWÄLTE

DIPL.-ING. H. SCHMITT
DIPL.-ING. W. MAUCHER

78 FREIBURG I. BR. 10. Dez. 1982
DREIKÖNIGSTR. 13
TELEFON: (07 61) 0088829
70774

Herr
Franz Lang
Kenzinger Straße 36
D-7833 Endingen a. K.

UNSERE AKTE - BITTE STETS ANGEBEN:

E 82 473 S

## Motor mit exzentrisch verstellbaren Antriebskörpern

Die Erfindung betrifft einen Motor mit im Takt der Drehbewegung exzentrisch verstellbaren Antriebskörpern, die
an- oder innerhalb mindestens eines Drehkörpers angeordnet sind, wobei Flüssigkeit an den exzentrisch weiter
vorstehenden Antriebskörpern angreift und den oder die
Drehkörper in Drehung versetzt.

Motoren dieser Art sind bereits bekannt, z. B. durch die
GB-PS 305 876. Zum Betreiben solcher vorbekannter Motoren ist jedoch eine strömende Flüssigkeit erforderlich.
Wärme, z. B. anfallende Abgaswärme, kann mit der vorbekannten Wasserkraftmaschine nicht ausgenutzt werden.

Der Erfindung liegt insbesondere die Aufgabe zugrunde,
einen Motor zu schaffen, der vorhandene Abgaswärme, insbesondere Temperaturdifferenzen (Wasser - Luft, Meerwassertemperaturdifferenz), ausnutzen und in eine Drehbewegung umwandeln kann.
Die erfindungsgemäße Lösung besteht vor allem darin, daß
bei einem Motor der eingangs erwähnten Art als Antriebskörper unterhalb eines Flüssigkeitsspiegels befindliche
Hohlkörper vorgesehen sind, die über Zu- und Ableitungen
mit einem Auftriebsgas steuerbar füll- sowie entleerbar
sind.

Auf diese Weise erhält man eine Anzahl von gefüllten, in

/2

einer Flüssigkeit befindlichen Auftriebskörpern, die einen Auftrieb in der Flüssigkeit verursachen. Dabei wird das bei den einzelnen Hohlkörpern wirksame Auftriebsgas bzw. dessen Rückfluß so gesteuert, daß eine Auftriebskraft laufend an einer Seite eines Drehkörpers wirksam wird und dadurch bei ihm über entsprechend große Zeitabschnitte eine Umlaufbewegung hervorruft. Das notwendige Volumen für das Auftriebsgas kann man über dessen Erwärmung, z. B. mittels vorhandener Abgaswärme erzeugen.

Zusätzliche Weiterbildungen der Erfindung sind in den Merkmalen der Unteransprüche noch näher ausgeführt. Dazu wird im einzelnen noch erläutert:
Zur Führung auf einer Nabe weist ein Auftriebskörper an seinen Stirnseiten je einen Flansch bzw. Verschlußdeckel auf, welche mit geringem Spiel an den Stirnflächen der Nabe anliegen und durch eine dazwischen angebrachte Flächendichtung einen dichten Hohlraum zwischen Naben-Außendurchmesser und Auftriebskörper-Innendurchmesser bilden. In diesem Hohlraum ist z. B. eine den Außenumfang der Nabe voll umschließende und zur Fläche hin dichtende Kammermanschette angebracht, die in Luftkammern unterteilt ist.

Die Luftkammern selbst stehen über Bohrungen entsprechend der Drehstellung mit der Zufluß- bzw. Rücklaufkammer im Trägerbolzen in Verbindung, die Zu- und Rücklaufkammern sind durch Trennstege getrennt, die zur Dichtung der Kammern zueinander Dichtschnüre aufweisen. Zufluß- und Rücklaufkammern sind mit einer Zufluß- bzw. Rücklaufleitung verbunden, die aus dem Flüssigkeitsbehälter herausgeführt sind und an einer Aufwärmkammer im Wärmetauscher enden. Dadurch ergibt sich ein geschlossener Kreislauf.

Vor Austritt der Rücklaufleitung aus dem Flüssigkeitsbehälter wird diese z. B. als Kühlschlange ausgebildet, wodurch das zur Aufwärmkammer zurückfließende gasförmige Medium gekühlt wird, wobei die Flüssigkeit im Flüssigkeitsbehälter als Kühlmedium und Wärmespeicher dient.

Die exzentrische Auslenkung des Auftriebskörpers wird durch den an der Nabe angebrachten Nabenbund begrenzt.

Durch die exzentrische Verschiebung des Auftriebskörpers mittels Differenzdruck zur Mittelachse vom Trägerbolzen, entsteht eine ebenfalls exzentrische Wirkung der Auftriebskraft, welche resultiert aus dem Verdrängervolumen des Auftriebskörpers, die sich als Drehmoment, bezogen auf die Mittelachse von Trägerbolzen und Nabe, bemerkbar macht.

Zur Nutzbarmachung dieses Drehmoment ist an der freien Seite der Nabe eine Antriebsbuchse befestigt, die kraftschlüssig mit einer Antriebswelle verbunden ist, welche durch eine Lagerbuchse aus dem Flüssigkeitsbehälter herausgeführt ist und so zum Antrieb von Arbeitsmaschinen oder eines Generators genutzt werden kann.

In besonderer erfinderischer Ausgestaltung ist der Abtrieb der Drehbewegung zentral gelagert, wobei in der Stirnseite des Trägerbolzens eine Lagerbohrung angebracht ist, in welcher eine Antriebswelle gelagert wird, die, wie schon beschrieben, kraftschlüssig mit einer Antriebsbuchse verbunden ist und durch eine Lagerbuchse aus dem Flüssigkeitsbehälter herausgeführt wird. Eine andere Gestaltung des Abtriebes besteht darin, daß der Trägerbolzen in der die Befestigungsseite gegenüberliegenden Flüssigkeitsbehälter-Wandung in einem Lagerflansch gehalten ist, wodurch sich eine hohe Stabilität ergibt. Bei dieser Anordnung ist auf der Antriebsbuchse ein Antriebszahnrad kraftschlüssig montiert, das wiederum in Zahnräder in einem Getriebe eingreift, die die Antriebswelle antreiben, die seitlich neben dem Trägerbolzen als Abtrieb herausgeführt ist.

Die Kammermanschette mit darin angebrachten Lufkammern ist in besonderer erfinderischer Ausgestaltung sowohl zur Nabe als auch zu den einzelnen Luftkammern durch Aufspannen als selbstdichtende Gummimanschette ausgebildet, die durch eingearbeitete Dehnungsfalten in jede Richtung beweglich ist und gleichzeitig als Kupplung zwischen dem Naben-Außendurchmesser und Auftriebskörper wirkt.

In einer anderen erfinderischen Ausgestaltung werden die Luftkammern durch Lamellen gebildet, die durch in der Nabe eingearbeitete Lamellenführungen verschiebbar gehalten werden, wobei das Auf- und Abbewegen durch Stifte, die stirnseitig in die Lamellen montiert und in Mitnehmernute eingreifend in Flansch und Verschlußdeckel so geführt und bewegt werdenk daß ein automatischer Ausgleich bei der exzentrischen Bewegung des Auftriebskörpers erfolgt, wobei zwischen Lamelle und Auftriebskörper-Innenmantel eine dichtende Linie bleibt.

Das exzentrische Bewegen des Auftriebskörpers kann auch durch Kolben erfolgen, die beweglich in Zylinderbohrungen, die in der Nabe eingearbeitet sind, geführt und gehalten werden.

Durch das Hintereinander-Anordnen von zwei oder mehreren kompletten Drehkörpern usw. bestehend aus den beschriebenen Elementen auf einem Trägerbolzen, ergibt sich eine erfindungsgemäß besondere Ausgestaltung, wenn zwischen den Drehkörpern eine Mitnehmerkupplung so angebracht ist, daß sich ein Kräfteverbund ergibt.

/5

In besonderer Ausgestaltung sind die Luftkammern bei Reihenanordnung zueinander so versetzt, daß sich in der Addition aller Kammern zueinander eine feine Fächerung ergibt, die den Rundlauf des Antriebsmotors sehr wesentlich positiv beeinflußt.

Bei einer beschriebenen Bauweise sind Zufluß- und Rücklaufleitung durch den stehenden Trägerbolzen geführt. Dadurch ergibt sich eine kupplungsfreie Verbindung zu der Zufluß- und Rücklaufkammer, die wiederum durch Radialdichtringe zur Nabe abgedichtet sind.

In einer anderen erfinderischen Gestaltung ist die Zufluß- und Rücklaufleitung seitlich zueinander versetzt in einem Verteilerflansch angebracht, die in Verteilernuten enden. Die Verbindung zu den Luftkammern erfolgt über Verbindungsbohrungen im Verschlußdeckel, wobei zwischen Verschlußdeckel und Verteilerflansch ein Dichtband angebracht ist.

Bei der bisher beschriebenen Ausführung war der Auftriebskörper ein kreisrundes Rohr. In einer anderen erfinderischen Ausgestaltung ist der Auftriebskörper als Bandmanschette ausgebildet, die wie ein Fließband auf einem Antriebsrad und einem Gegenrad montiert ist, welche wiederum in einem Bandträger gelagert werden. Die Bandmanschette ist unterteilt in Bandkammern, die über Schlitze mit den Verteilerkammern verbunden sind, in welche Zufluß- und Rücklaufleitung münden. Das Prinzip entspricht der erstbeschriebenen Ausführung, jedoch können in diesem Falle größere Auftriebsleistungen erzielt werden. Durch die exzentrische Auslenkung des Auftriebskörpers ergibt sich auf der Rücklaufseite durch die unterschiedliche Anzahl der wirksamen Kammern ein gewisser Pumpeffekt, der in erfinderischer Ausgestaltung noch durch eine in die Rücklaufleitung montierte Pumpe mit Ausgleichsventil unterstützt wird und so die Geschwindigkeit des Durchlaufes wesentlich erhöht und dadurch auch die Leistung vergrößert werden kann. Die Aufgabe des Ausgleichsventils besteht darin, Leckverluste im Ringsystem durch Ansaugen von Luft im Bedarfsfalle auszugleichen.

Ist keine zusätzliche Pumpe im Einsatz, befindet sich in der Rücklaufleitung vor der Aufwärmkammer ein Rückschlagventil.

Um zu verhindern, daß Flüssigkeit zwischen Nabe und Auftriebskörper eindringt, sind zwischen dem am Auftriebskörper befindlichen Flansch und dem Verschlußdeckel sowie den Stirnseiten der Nabe Flächendichtringe angebracht.

In besonderer Ausgestaltung wird anstelle der Flächendichtung zwischen Verschlußdeckel und Antriebsbuchse bzw. zwischen Flansch und Nabenbund eine Mitnehmermanschette angebracht, die durch einen Klemmring bzw. Ring gehalten wird. Diese Anordnung hat den Vorteil, daß die Mitnehmermanschette, Dichtungs- und Kupplungsfunktion übernimmt.

Zur Nutzung der Restwärme aus dem Wärmetauscher wird die Abgasleitung besonders bei Verbrennungsvorgängen durch den Flüssigkeitsbehälter als Kühlschlange geführt, wobei die Flüssigkeit Kühlung und Wärmespeicherung übernimmt.

Nachfolgend ist die Erfindung anhand von in den Zeichnungen dargestellten Ausführungsbeispielen noch näher erläutert. Es zeigen in unterschiedlichen Maßstäben:

Fig. 1    eine teilweise im Schnitt dargestellte Aufsicht der Gesamtanlage einschließlich des zugehörigen rotationsmotorartigen Drehkörpers,

Fig. 2  einen Teil-Längsschnitt aus einem Drehkörper ähnlich dem nach Fig. 1,

Fig. 3  einen Teil-Querschnitt durch den inneren Bereich des Drehkörpers entsprechend der Schnittlinie III-III in Fig. 1,

Fig. 4  eine teilweise im Schnitt gehaltene Stirnansicht auf den inneren Teil des Drehkörpers in einer gegenüber Fig. 3 etwas abgewandelten Ausführungsform,

Fig. 5  einen Teil-Längsschnitt durch den inneren Bereich des Drehkörpers entsprechend der Schnittlinie V-V in Fig. 4,

Fig. 6  einen Teil-Längsschnitt des Drehkörperinneren ähnlich Fig. 5 bei einer weiteren, abgewandelten Ausführungsform,

Fig. 7  mehrere auf einem Trägerbolzen in Reihe hintereinander angeordnete Auftriebskörper des Drehkörpers in stark schematisierter Darstellungsweise,

Fig. 8  eine stärker abgewandelte Ausführung des Motors in Bandanordnung in stark schematisierter Darstellungsweise und

Fig. 9  einen Teil-Querschnitt durch den Innenbereich des Drehkörpers ähnlich Fig. 3 bei abgewandelter Ausführungsform.

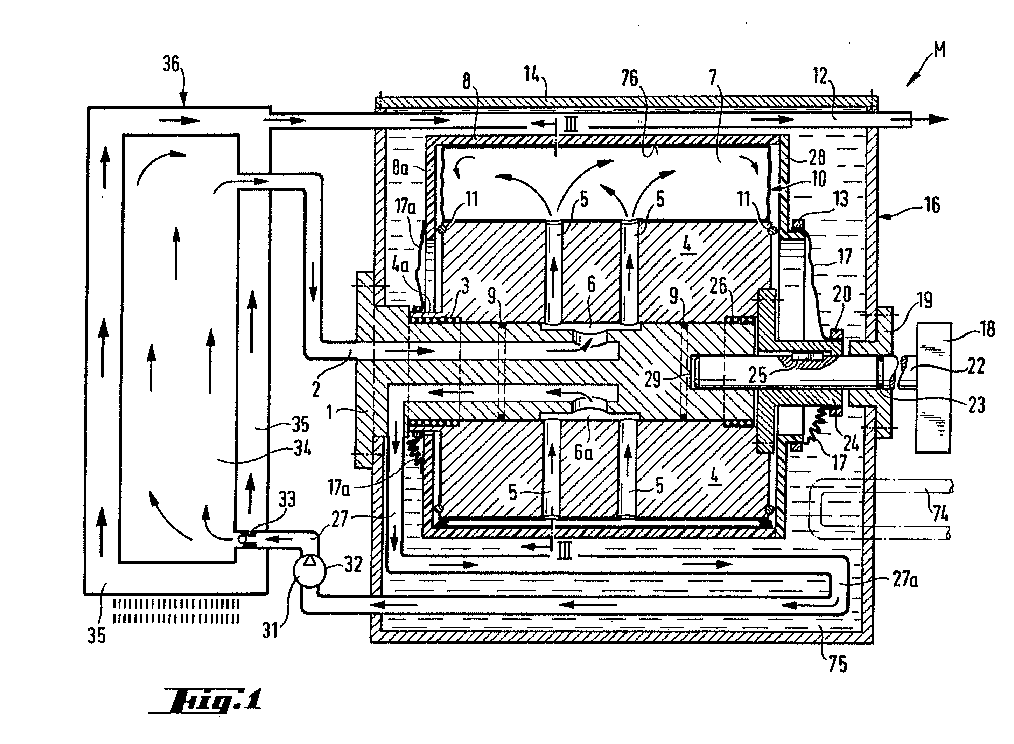

Fig. 1 zeigt eine erfindungsgemäße Gesamtanlage mit einem im ganzen mit M bezeichneten rotationsmotorartigen Drehkörper. Dabei ist in einem Flüssigkeitsbehälter 16 ein Trägerbolzen 1 angeordnet, der waagerecht in den Flüssigkeitsbehälter 16 hineinragt. Dieser hat eine offene Seite, die mittels des Behälterdeckels 14 verschlossen ist. Der Trägerbolzen 1 ist an der Wandung des Flüssigkeitsbehälters 16 durch bekannte Befestigungselemente gehalten. Am Trägerbolzen 1 sind je eine Zuflußkammer 6 und eine Rückflußkammer 6 a vorgesehen. Die Zuflußkammer 6 steht über eine Zuflußleitung 2 mit einer Aufwärmkammer 34 in Verbindung. Die Rückflußkammer 6 a ist an eine Rückflußleitung 27 angeschlossen, welche ebenfalls zur Aufwärmkammer 34 führt. Dabei ist die Rückflußleitung 27 innerhalb des Flüssigkeitsbehälters 16 als Kühlschlange 27 a ausgebildet. Sie wird seitlich aus dem Flüssigkeitsbehälter 16 herausgeführt.

Am Außenumfang des Trägerbolzens 1 (Fig. 1) sind Lager 3 und 26 angebracht, so daß eine darauf gelagerte Nabe 4 ohne großen Reibungsverlust sich darauf drehen kann. Zur Abdichtung der Zufluß- und der Rückflußkammer 6 bzw. 6 a sind zwischen dem Trägerbolzen 1 und der Nabe 4 Radialdichtringe 9 angebracht. Als Anschlag zum Trägerbolzen 1 und zur Begrenzung des exzentrischen Auslenkens eines rohrartigen Auftriebskörpers ist an der Nabe 4 ein Nabenbund 4 a angeformt.

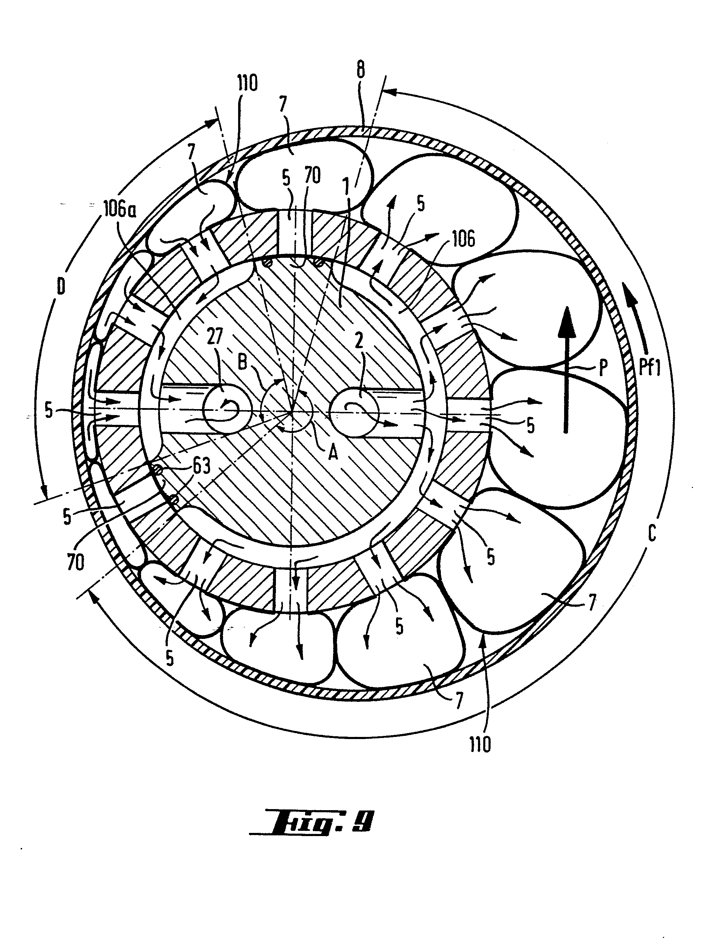

Der Drehkörper M besitzt den bereits erwähnten rohrartigen Auftriebskörper 8, der mit einem wesentlich größeren Durchmesser als die Nabe ausgerüstet ist und diese außen umfaßt, und zwar im Betriebszustand exzentrisch, wie besonders gut aus Fig. 3 erkennbar. An seiner einen Stirnseite besitzt der Auftriebskörper 8 einen Flansch 8 a. An der anderen Stirnseite ist er durch einen Verschlußdeckel 28 begrenzt. Der Flansch 8 a und der Verschlußdeckel 28 sind an den Stirnseiten der Nabe 4 in axialer

/9

Richtung geführt. Außerdem sind dort zwischen den Naben-Stirnseiten einerseits und dem Flansch 8 a bzw. dem Verschlußdeckel 28 Flächendichtringe 11 vorgesehen, die eine dichte, jedoch bewegliche Verbindung zwischen dem Auftriebskörper 8 und der Nabe 4 herstellen. Zweckmäßigerweise sind der Auftriebskörper 8 sowie sein Flansch 8 a und der zugehörige Verschlußdeckel 28 aus einem leichten Kunststoff gefertigt, damit der Auftriebskörper eine hohe Auftriebsleistung erreichen kann. Zur Reduzierung des Flüssigkeitswiderstandes ist der Außenmantel des Auftriebskörpers 8 poliert ausgeführt.

Zwischen der Außenmantelfläche der Nabe 4 und der Innenwand des Auftriebskörpers 8 ist eine im ganzen mit 10 bezeichnete Kammermanschette selbstdichtend angeordnet. Diese ist mittels im wesentlichen radial angeordneten Zwischenwänden 72 in zahlreiche in sich jeweils geschlossene Luftkammern 7 unterteilt, die sich in Umfangsrichtung der Nabe eine an die andere anschließen. Als Material für die Kammermanschette 10 eignet sich besonders Gummi. Zur Begünstigung der Volumenveränderung der Luftkammern 7 sind deren Zwischenwände 72 mit Dehnfalten 73 versehen. Die einzelnen Luftkammern 7 sind, je nach ihrer Position, mit der Zufluß- oder der Rückflußkammer 6 bzw. 6 a durch Bohrungen 5 verbunden (Fig. 1 und 3).

An der im Flüssigkeitsbehälter 16 befindlichen Stirnseite der Nabe 4 ist eine Antriebsbuchse 24 vorgesehen. Sie steht über einen Mitnehmerkeil 25 drehfest mit einer Antriebswelle 22 in Verbindung. Diese ist durch eine Lagerbuchse 19, abgedichtet durch einen Wellendichtring 23, aus dem Flüssigkeitsbehälter 16 herausgeführt und steht dort mit einer anzutreibenden Maschine 18 in Verbindung.

Anstelle des Flächendichtringes 11 kann zwischen dem Ver-

/10

schlußdeckel einerseits und der Antriebsbuchse 24 andererseits eine Mitnehmermanschette 17 angebracht sein, die durch einen Klemmring 13 und einen Haltering 20 am Verschlußdeckel 28 bzw. an der Antriebsbuchse 24 gehalten ist. An der gegenüberliegenden Stirnseite des Auftriebskörpers 8, nämlich an dessen Flansch 8 a, ist eine analoge Mitnehmermanschette 17 a angebracht. Sie übernimmt dort die Dicht- und Mitnehmerfunktion.

Die Antriebswelle 22 ist zusätzlich in einer Lagerbohrung 29 des Trägerbolzens 1 gelagert.

Jede Kammer 7 der Kammermanschette 10 stellt einen in sich allseits geschlossenen Balg dar, der lediglich über eine oder mehrere parallele Bohrungen 5 (Fig. 3), die sich in der Nabe 4 befinden, mit der Zulaufkammer 6 oder der Rückflußkammer 6 a in Verbindung stehen.
Die vorerwähnten Mitnehmermanschetten 17 sind einerseits beim beim Verschlußdeckel 28 bzw. der Antriebsbuchse 24, andererseits beim Flansch 8 a und beim Nabenbund 4 a drehfest angebracht. Dabei können die Mitnehmermanschetten 17 die sich ändernde exzentrische Lage des Auftriebskörpers 8 im Verhältnis zur Nabe 4 überbrücken. Soweit erforderlich, können diese Dichtmanschetten 17 jedoch auch die Antriebsbuchse 24 entsprechend der Drehbewegung des Auftriebskörpers 8 mitnehmen. Dies ist deshalb gut möglich und belastet die Dichtmanschetten 17 nicht zu stark, weil die einzelnen Kammern 7 mit ihren radial äußeren Umfangsabschnitten sich innen an den Auftriebskörper 8 andrücken. Dabei entsteht ein Reibschluß, der bereits eine Mitnahme zwischen dem sich drehenden Auftriebskörper 8 und der sich mitdrehenden Nabe 4 bzw. der daran drehfest angebrachten Antriebsbuchse ergibt.

Bei der Ausführung gemäß Fig. 1 und 3 ist zur Beschleunigung des Medienaustausches im Gaskreislauf von Zulaufleitung 2 und Rückflußleitung 27, gegebenenfalls Kühlschlange
27 a, eine Pumpe 31 eingebaut, die ein Ausgleichsventil 32
besitzt. Zusätzlich befindet sich in der Rückflußleitung
27 ein Rückschlagventil 33. Die Pumpe 31 und das Rückschlagventil 33 sind bei der Ausführung gemäß Fig. 1 und
3, bei der praktisch jeweils gleich viele Luftkammern 7
mit der Zuflußkammer 6 oder der Rückflußkammer 6 a in Verbindung stehen, erforderlich.

Wie gut in Fig. 1 erkennbar, ist außerhalb des Flüssigkeitsbehälters 16 ein Wärmetauscher 36 bei der Gesamtanlage vorgesehen. In dessen Innenbereich befindet sich die
Aufwärmkammer 34, durch welche das Gas oder die Luft
durch die Rückflußleitung 27 zuströmend (unten) eintritt
und (oben) durch die Zuflußleitung 2 ausströmt. Der Aufwärmkammer 34 bzw. dem sich darin befindlichen Gas wird
mittels eines einen Durchlaufraum 35 durchfließenden Heizmediums Wärme zugeführt. Dies ist z. B. durch ein allseitiges Umspülen der Aufwärmkammer 34 realisiert. Dadurch
erreicht man, daß das aus der Rückflußleitung 27 zurückfließende Gas wieder erwärmt wird und dementsprechend ein
größeres Volumen annimmt. Diese Volumenzunahme bringt
dann wieder das Aufblähen der Luftkammern 7 zuwege, die
mit der Zuflußleitung 2 in Verbindung stehen (Fig. 1 und
3). Beim Einsatz von Brennstoffen kann man deren Abgas
über eine Abgasleitung 12 (Fig. 1) abführen. Diese kann
gegebenenfalls zur Wärmeabgabe durch den Flüssigkeitsbehälter 16 geführt sein.

In Fig. 1 ist auf der rechten Seite strichpunktiert noch
eine weitere Wärmetauscherschlange 74 eingezeichnet. Die
über die Kühlschlange 27 a abgegebene Wärme kann z. B.
über das sich im Flüssigkeitsbehälter 16 befindliche Wasser 75 od. dgl. Medium dieser Wärmetauscherschlange mitgeteilt und z. B. für Heizzwecke herangezogen werden. Gegebenenfalls könnte man mit der so zu gewinnenden Wärme eine zweite Stufe gleicher Art wie die Gesamtanlage gemäß Fig. 1 betreiben.

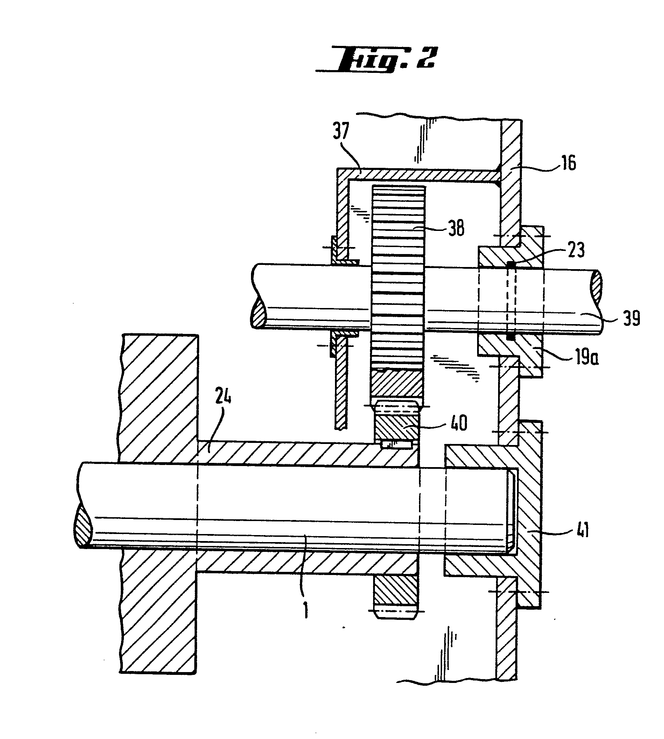

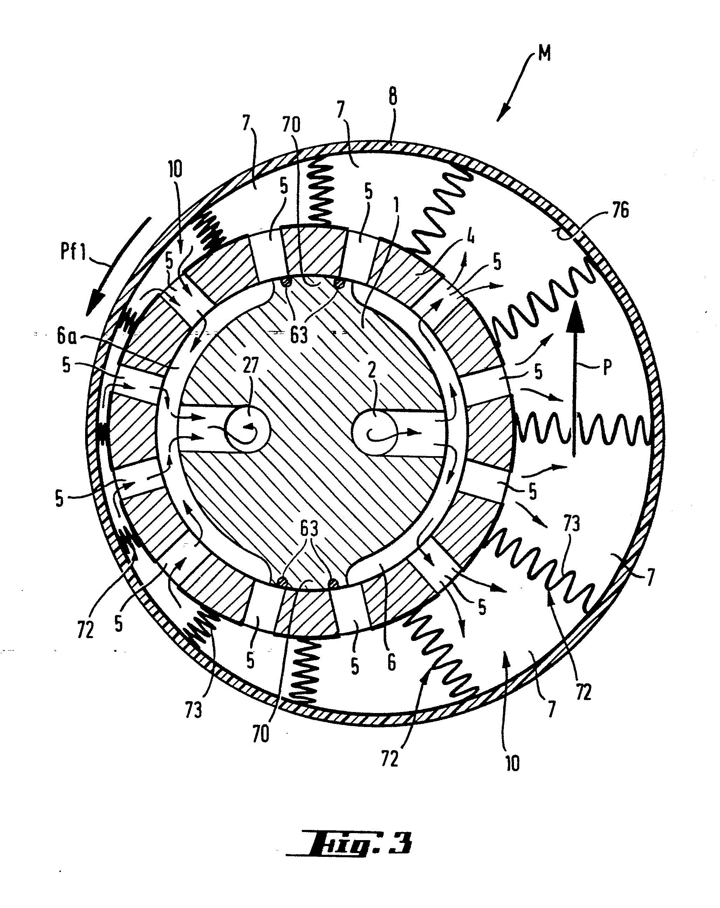

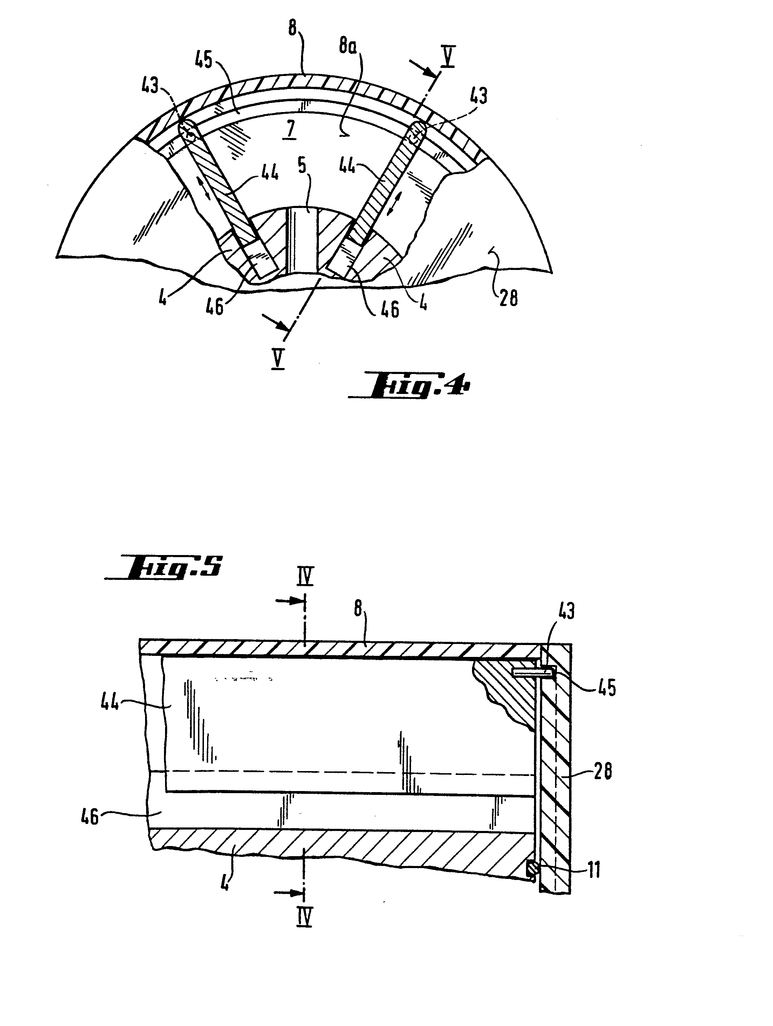

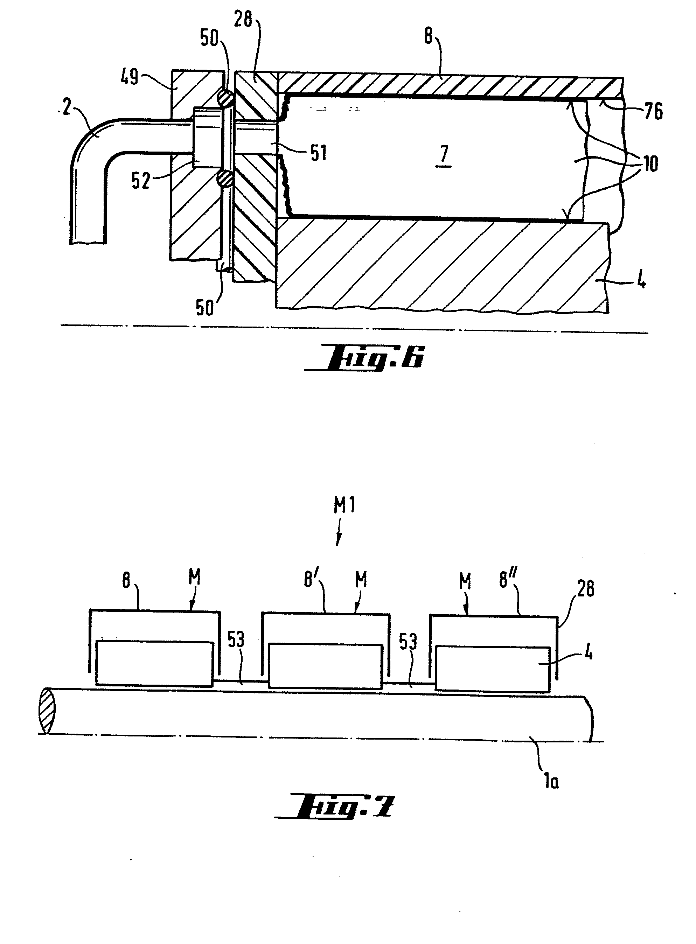

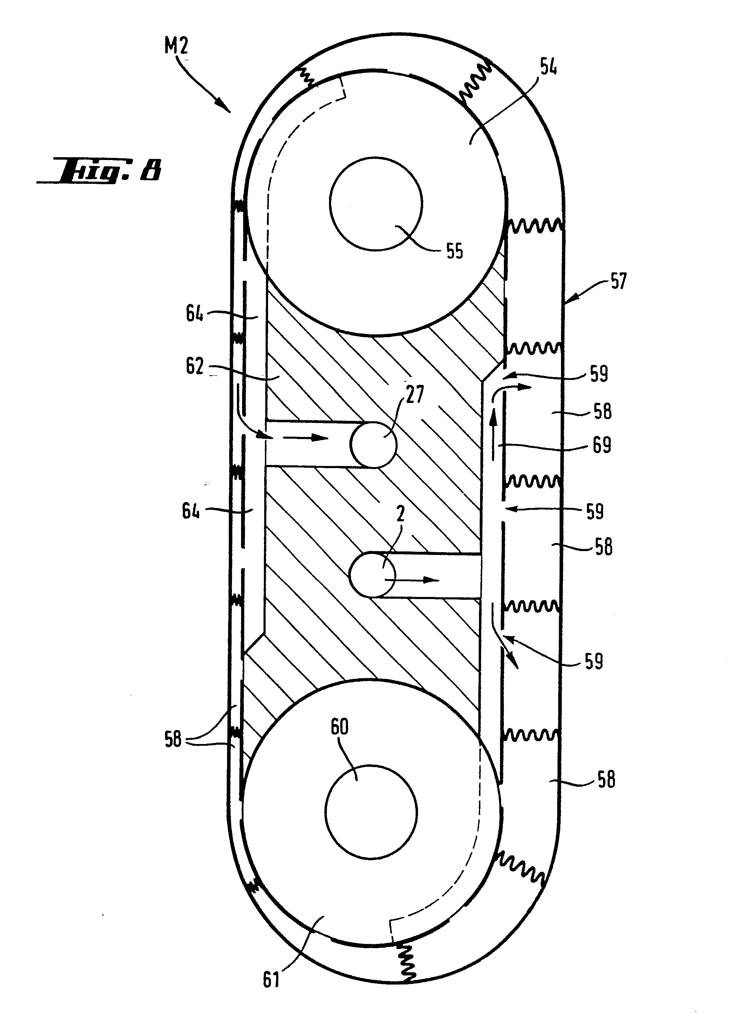

Bei einer etwas abgewandelten Konstruktion des Drehkörpers M (Fig. 2) ist eine zusätzliche Halterung des Trägerbolzens 1 in einem Bolzenlager 41 vorgesehen. Dieses ist in der Gehäusewand des Flüssigkeitsbehälters 16 befestigt. Durch diese Anordnung ergibt sich eine stabile Gesamtlagerung für den Drehkörper M. Gemäß Fig. 2 ist auf der Antriebsbuchse 24 ein Antriebszahnrad 40 kraftschlüssig aufgesetzt, welches in ein Abtriebszahnrad 38 eingreift. Dieses ist kraftschlüssig mit einer Welle 39 verbunden, die in einem Getriebegehäuse 37 untergebracht und in einer Lagerbüchse 19 a so gelagert ist, daß das äußere Ende der Abtriebswelle 39 aus dem Flüssigkeitsbehälter 16 herausragt. Zwischen dieser Abtriebswelle 39 und der Lagerbuchse 19 a ist ein Wellendichtring 23 angebracht. Die in Fig. 2 dargestellte einfache Form eines Zahnradabtriebes kann auch durch ein Unter- oder Übersetzungsgetriebe ergänzt sein.

Die Fig. 3 zeigt einen Querschnitt durch den inneren Bereich des Drehkörpers M in einer Funktionsstellung. Auf dem Trägerbolzen 1 erkennt man die Zuflußkammer 6 und die Rückflußkammer 6 a. Diese beiden Kammern sind durch Trennstege 70 voneinander getrennt. Dabei sind Dichtschnüre 63 zu erkennen, die eine druckdichte Trennung der Zuflußkammer 6 von der Rückflußkammer 6 a bewirken. Die Nabe 4 ist, wie bereits erwähnt, drehend auf dem Trägerbolzen gelagert. Wie bereits erwähnt, befinden sich zwischen dem Außenmantel der Nabe 4 und dem Innenmantel 76 des Auftriebskörpers die Kammern 7 der Kammermanschette 10. Sie besteht aus einem aus Gas- oder Luftkammern 7 gebildeten Kreisring. Die einzelnen Kammern 7 sind - in Umfangsrichtung sowie ohne unterschiedliche Druckbeaufschlagung - etwa gleich groß und jeweils für sich geschlossen, wenn man von den Bohrungen 5 absieht.

Da sich die einzelnen Kammern 7 entsprechend den Dehnfalten 73 in radialer Richtung balgförmig vergrößern oder verkleinern können, ergibt sich die Möglichkeit, daß der Auftriebskörper 8 schwimmend radial in allen Richtungen verschoben werden kann, wie es die Fig. 3 für eine Stellung zeigt. Durch Zuführen von gasförmigem Medium von höherem Druck über die Zuflußleitung 2 in die Zuflußkammer 6 und von dort in die damit durch die Bohrungen 5 in Verbindung stehenden Luftkammern ergibt sich eine Verschiebung des Auftriebskörpers 8 gegenüber der Nabe 4 nach rechts (Fig. 3). Die insgesamt vorhandene Auftriebskraft wird demgemäß ebenfalls zumindest zu einem Großteil nach rechts verschoben, so daß sich eine als Drehmoment wirkende Auftriebskraft P einstellt, die eine entsprechende Drehbewegung bewirkt (Pfeil Pf 1 in Fig. 3). Diese Auftriebskraft greift an dem entsprechenden Hebelarm zum Mittelpunkt des Trägerbolzens 1 bzw. der Nabe 4 an. Durch diese Drehbewegung werden diejenigen Luftkammern 7, die mit der Zuflußkammer 6 in Verbindung stehen, verschoben. Die zugehörigen Bohrungen 5 wandern dabei z. B. über den oberen Trennsteg 70 und kommen dann in den Bereich der Rückflußkammer 6 a. Dann steht der Inhalt der entsprechenden Luftkammer(n) 7 über die zugehörige Bohrung 5 mit der Rückflußleitung 27 in Verbindung. Das verbrauchte Medium kann über diese Rückflußleitung 27 zur Aufwärmkammer 34 des Wärmetauschers 36 zurückfließen. Dieser Vorgang wiederholt sich permanent. Entsprechend der Energiezufuhr im Wärmetauscher ergibt sich eine Auslenkung des Auftriebskörpers 8, die sich in eine Drehbewegung des Drehkörpers M umsetzt.

In Abwandlung der beschriebenen Kammermanschette 10 (Fig. 3) können die Luftkammern 7 durch die Anbringung von Lamellen 44 gebildet sein, was in Fig. 4 und 5 gezeigt ist. Dabei sind die Lamellen 44 in Lamellenführungen 46 angeordnet, die sich in der Nabe 4 befinden. Die Lamellen 44 sind dabei leicht auf- und abbewegbar geführt. Dabei ist vorgesehen, daß diese Auf- und Abwärtsbewegung (radiale Hin- und Herbewegung) zwangsläufig erfolgt. Dies wird dadurch bewirkt, daß in den Stirnseiten der Lamellen 44 Mitnehmerstifte 43 angebracht sind, die in einer Mitnehmernut 45 eingreifen. Mitnehmernuten 45 sind im Flansch 8 a und im Verschlußdeckel 28 eingearbeitet. Die Lamellen werden dadurch zwangsläufig verstellt entsprechend der exzentrischen Bewegung vom Auftriebskörper 8. Der Abstand vom Auftriebskörper-Innenmantel zur benachbarten Lamellen-Oberkante verändert sich dabei nicht. Auch hier erfolgt die Zu- und Abfuhr des Arbeitsmediums wieder über die Bohrungen 5 (Fig. 4). Dabei zeigt Fig. 5 die Lamellenanordnung längsseitig, wobei gut die Führung der Mitnehmerstifte 43 in einer Mitnehmernut 45 ersichtlich ist. Der Mitnehmerstift 43 selbst ist in der Lamelle 44 befestigt. Die Führung der Lamelle 44 in ihrer Lamellenführung 46 der Nabe 4 ist ebenfalls erkennbar.

Alternativ zu der in Fig. 1 beschriebenen zentralen Zu- und Abführung des gasförmigen Arbeitsmediums kann dies auch mittels eines seitlichen Verteilerflansches 49 erfolgen, was schematisch in Fig. 6 dargestellt ist. In diesem Verteilerflansch sind Verteilernuten 52 eingearbeitet (in Fig. 6 ist nur eine dargestellt). Dort erkennt man auch gut, daß zwischen dem Auftriebskörper 8 und der Nabe 4 eine Kammermanschette 10 mit einer Luftkammer 7 angeordnet ist. Diese steht über eine im Verschlußdeckel 28 angeordneten Verbindungsbohrung 51 mit der Verteilernut 52 in Verbindung. Analog der in Verbindung mit Fig. 1 und 3 beschriebenen Anordnung ist auch bei der Ausführung gemäß Fig. 6 eine Zulauf- sowie eine Rückflußkammer, um 180° versetzt, vorgesehen. Dichtbänder 50 dichten den Verteilerflansch 49 druckdicht gegenüber dem Verschlußdeckel 28 ab unter Berücksichtigung des Verlaufs des Zu- und Rückflusses des Arbeitsmediums. Auch hier erfolgt dessen Zu- und Abführen über die Zuflußleitung 2 sowie über eine der Rückflußleitung 27 nach Fig. 1 entsprechende Rückflußleitung.

Fig. 7 zeigt die Ausgestaltung eines Motors mit mehreren Drehkörpereinheiten M, wie sie in Fig. 1 und 3 beschrieben sind. Man erkennt, daß auf einem Trägerbolzen 1 a mehrere Drehkörpereinheiten M angeordnet sind, die durch Mitnehmerkupplungen 53 kraftschlüssig miteinander verbunden sind. Dementsprechend kann man Gesamtanlagen entsprechend dem jeweiligen Leistungsbedarf herstellen. Bei Drehkörpern M gemäß Fig. 1 ist beim Ausfallen eines Auftriebskörpers immer noch eine verminderte Leistung möglich. Wird bei der Reihenschaltung gemäß Fig. 7 die Montage der Auftriebskörper 8 so vorgenommen, daß in axialer Richtung benachbart angeordnete Auftriebskörper 8, 8', 8'' jeweils in Umfangsrichtung gegeneinander versetzt angeordnet sind, so wird dadurch die Laufruhe des gesamten Motors M 1 verbessert, da die Füll- und Entladeabstände ganz klein gefächert sind.

Fig. 8 zeigt das Schema eines etwas abgewandelten Motors M 2, der als Bandanordnung ausgebildet ist. Dabei ist eine Bandmanschette 57 als geschlossenes Band über ein Antriebsrad 54 mit einer innen liegenden Welle 55 vorgesehen. Ein auf einer entsprechenden Welle 60 angeordnetes Gegenrad 61 führt die als Endlosband ausgebildete Bandmanschette 57. Sie ist in einzelne Bandkammern 58 unterteilt, die vom Aufbau her den Luftkammern 7 gemäß Fig. 1 und 3 entsprechen. Die Bandkammern 58 sind über Öffnungen 59 abwechselnd mit einer Zuflußkammer 69 bzw. einer Rückflußkammer 64 verbunden, die hier in ihrer Längserstreckung der Form der Bandmanschette 57 angepaßt sind. Die Zuflußkammer 69 steht auch hier mit der Zulaufleitung 2 für das Arbeitsmedium in Verbindung; entsprechendes gilt für die Rückflußkammer 64, die mit der Rückflußleitung 27 verbunden ist. Die Leitungen 2 und 27 bilden wiederum mit der Aufwärmkammer 34 einen geschlossenen Kreislauf, wie bereits gemäß Fig. 1 und 3 beschrieben. Die Ausführung des Motors M 2 gemäß Fig. 8 hat den Vorteil, daß größere Leistungen erzielt werden können. Auch dort ist eine Reihenanordnung analog Fig. 7 möglich. Der ganze Drehmechanismus ist auf einem Bandträger 62 gelagert.

Erwähnt sei noch, daß die erfindungsgemäße Gesamtanlage nicht nur in einem geschlossenen Kreislauf für das Arbeitsmedium arbeiten kann. Wenn z. B. Abgaswärme, beispielsweise in Form von Rauchgas, zur Verfügung steht, kann man damit die Aufwärmkammer und darin befindliche Luft erhitzen, die durch diese Erhitzung erreichte Volumen- bzw. Druckerhöhung für den Betrieb der Motoren M bzw. der Drehkörper ausnutzen und die Luft über die Rücklaufleitung ins Freie strömen lassen.

Eine wesentliche Weiterbildung der Ausführung gemäß Fig. 1 und 3 ist in Fig. 9 dargestellt. Dort erstreckt sich die Zuflußkammer 106 über einen Umfangswinkel A, der etwas größer ist als 180°, während sich die Rückflußkammer 106 a über einen Umfangswinkel B von etwa 90° erstreckt, also die Ausdehnung der Zuflußkammer 106 in Umfangsrichtung merkbar größer ist als die entsprechende Ausdehnung der Rückflußkammer. Daraus ergibt sich folgende vorteilhafte Arbeitsweise: Die bereits über die Bohrungen 5 mit der Rückflußkammer 106 in Verbindung stehenden Luftkammern 7 entleeren sich in kurzer Zeit im Umfangsabschnitt D; sie haben dort keinen wesentlichen Druck mehr. Dagegen ist die Anzahl der über ihre jeweiligen Bohrungen 5 mit der Zulaufkammer 106 in Verbindung stehenden Luftkammern wesentlich größer als die mit der Rückflußkammer 106 a in Verbindung stehenden Luftkammern. Dementsprechend herrscht – in Fig. 9 auf der rechten Seite im Umfangsabschnitt C – ein merkbar größerer Aufrichtdruck in den dortigen Luftkammern 7. Diese drücken gewissermaßen aufgrund ihrer Überzahl die wenigen, auf der linken Seite mit der Rückflußkammer 106 a in Verbindung stehenden Luftkammern 7 zusammen. Dadurch erhält man nicht nur die Ausschubkraft, um das Gas, welches sich in den mit der Rückflußkammer 106 a in Verbindung stehenden Luftkammern 7 befindet, auszuschieben, sondern man erhält auf der rechten Seite bei Fig. 9 auch ein entsprechend größeres Verdrängervolumen und eine entsprechende Auftriebskraft P. Wegen der vorbeschriebenen, besonderen Ausbildung kann man bei der Ausführung gemäß Fig. 9 auf die Pumpe 31 verzichten. Selbstverständlich kann man die Ausführung gemäß Fig. 9 auch in einem offenen Kreislauf arbeiten lassen, bei dem das aus der Rückflußleitung 27 austretende Arbeitsmedium ins Freie tritt.

Eine Pumpe 31 kann jedoch auch bei einem offenen System noch von Vorteil sein, wenn sie z. B. die in die Aufwärmkammer 34 eintretende Luftmenge vergrößert.

Das in Verbindung mit Fig. 1 und 3 bereits beschriebene Rückschlagventil 33 muß bei der Ausführung gemäß Fig. 9 und geschlossenem Kreislauf nicht vorhanden sein.

Fig. 9 zeigt auch noch eine weitere Abwandlung der Konstruktion im Vergleich zu Fig. 3: Während bei Fig. 3 sämtliche Kammern 7 durch eine zusammenhängende, im Querschnitt kreisringförmige Manschette gebildet werden, bei der beispielsweise die Zwischenwände 72 einstückig mit der übrigen Kammermanschette 110 verbunden sind, bestehen die einzelnen Luftkammern 7 gemäß Fig. 9 jeweils aus separaten Einzelteilen, die an der Nabe 4 befestigt und dort mit der Bohrung 5 in Verbindung stehen.

Der Drehkörper M der erfindungsgemäßen Gesamtanlage arbeitet folgendermaßen: Der Auftriebskörper 8 mit den zugehörigen Anschlußteilen wird in den Flüssigkeitsbehälter 16 eingebracht. Die darin befindliche Flüssigkeit kann gegebenenfalls auch als Kühl- und Wärmespeichermedium dienen. Die Lagerung des Auftriebskörpers 8 ist so, daß er und die zugehörige Nabe 4 sich auf dem Trägerbolzen 1 drehen kann. Dementsprechend besteht die Möglichkeit, daß durch exzentrisches Verschieben des Auftriebskörpers 8 zur Längsmittelachse des Trägerbolzens 1 auch eine seitliche Verschiebung des Auftriebes eintritt, so daß eine Auftriebskraft P entsteht. Die laufende exzentrische Verschiebung des Auftriebskörpers 8 wird mit Hilfe der Luftkammer und deren vorbeschriebene unterschiedliche Füllung erreicht.

Bei der Rückführung des Arbeitsmediums über die Rückflußleitung 27, die im Bereich des Flüssigkeitsbehälters 16 als Kühlschlange 27a ausgebildet sein kann, erfolgt durch die Flüssigkeit im Flüssigkeitsbehälter eine Abkühlung. Die dabei dem Arbeitsmedium entzogene Wärmeenergie wird in der Flüssigkeit gespeichert und ergibt so einen Wärmeenergiespeicher, der für verschiedene Zwecke genutzt werden kann. Dabei kann das Anbringen eines zusätzlichen Behälters und durch Flüssigkeitsaustausch diese Wärme gegebenenfalls wieder als Antrieb für einen weiteren Antriebsmotor genutzt werden.

Der zwischen Zulaufleitung und Rücklaufleitung liegende Temperaturbereich ist ausreichend, um den Motor M anzutreiben. Als Beispiel sei hier angeführt, daß bei einem Motor mit 0,5 m Durchmesser des Auftriebskörpers 8 der Druck etwa nur 0,05 atü betragen muß. Dies entspricht einer Temperaturdifferenz, bezogen auf Luft, von nur 14°.

Als theoretisches Beispiel werden folgende Daten beim Motor M genannt:

| | |
|---|---|
| Durchmesser des Auftriebskörpers 8: | 10 dm |
| Länge des Auftriebskörpers 8: | 20 dm |
| Eigengewicht des Auftriebskörpers: | 100 kp |
| exzentrische Auslenkung zur Mittelachse: | 1 dm |
| Umdrehungen pro Minute: | 200 U/min |

Auftriebskraft P = Fläche x Länge - Eigengewicht des Auftriebskörpers
= 1 470 kp
Antriebsleistung = Auslenkung x 3,14 x U/min x P
= 92.316 mkp/min
= 20,5 PS 15,088 KW

Bei größerer Drehzahl erhöht sich die Leistung entsprechend.

Alle vorbeschriebenen und in den Ansprüchen aufgeführten Merkmale können einzeln oder in beliebiger Kombination miteinander erfindungswesentlich sein.

PATENTANWÄLTE
DIPL.-ING. H. SCHMITT
DIPL.-ING. W. MAUCHER

0088829

78 FREIBURG I. BR. 10. Dez. 1982
DREIKÖNIGSTR. 13
TELEFON: (07 61) 7 07 73
7 07 74

Herr
Franz Lang
Kenzinger Straße 36
D-7833 Endingen a. K.

UNSERE AKTE · BITTE STETS ANGEBEN!

E 82 473 S

Motor mit exzentrisch verstellbaren Antriebskörpern

Patentansprüche

1. Motor mit im Takt der Drehbewegung exzentrisch verstellbaren Antriebskörpern, die an oder innerhalb mindestens eines Drehkörpers angeordnet sind, wobei Flüssigkeit an den exzentrisch weiter vorstehenden Antriebskörpern od. dgl. greift und den oder die Drehkörper in Drehung versetzt, d a d u r c h g e - k e n n z e i c h n e t , daß als Antriebskörper unterhalb eines Flüssigkeitsspiegels befindliche Hohlkörper (7) vorgesehen sind, die über Zu- und Ableitungen u. dgl. (2, 6, 5, 6 a, 27) mit einem Auftriebsgas steuerbar füll- sowie entleerbar sind.

2. Motor nach Anspruch 1, dadurch gekennzeichnet, daß das Auftriebsgas erwärmt ist, vorzugsweise aus erwärmter Luft besteht.

3. Motor nach Anspruch 1 oder 2, dadurch gekennzeichnet, daß die Steuerung des Zu- und Abflusses des Auftriebsgases mit Hilfe der Drehbewegung des Drehkörpers (M) erfolgt.

4. Motor nach Anspruch 1 bis 3, dadurch gekennzeichnet, daß der Drehkörper (M) eine Nabe (4) aufweist und mit dieser auf einem Trägerbolzen (1) innerhalb eines Flüssigkeitsbehälters (16) drehbar gelagert ist und daß der Drehkörper (M) an der Nabe ange-

/21

brachte Hohlkörper aufweist.

5.  Motor nach Anspruch 1 bis 4, dadurch gekennzeichnet,
    daß die vorzugsweise als Luft- oder Gaskammern (7)
    ausgebildeten Hohlkörper von einem im wesentlichen
    rohrförmigen Auftriebskörper (8) umschlossen sind.

6.  Motor nach Anspruch 1 bis 5, dadurch gekennzeichnet,
    daß er eine Aufwärmkammer (34) zum Erwärmen des Auftriebsgases besitzt, die zweckmäßigerweise einen
    Wärmetauscher (36) aufweist.

7.  Motor nach Anspruch 1 bis 6, dadurch gekennzeichnet,
    daß der Trägerbolzen (1) einseitig an einer Wand des
    Flüssigkeitsbehälters (16) befestigt ist und an der
    Stirnseite eine Lagerbohrung (29) aufweist, in welcher eine Antriebswelle (22) gelagert ist und durch
    eine Lagerbuchse (19) hindurch zentral zur Mittelachse als Antrieb herausgeführt ist.

8.  Motor nach Anspruch 1 bis 7, dadurch gekennzeichnet,
    daß der Trägerbolzen (1) an der seiner Befestigungs-
    seite gegenüberliegenden Wandung des Flüssigkeits-
    behälters (16) in einem Lagerflansch (41) statisch
    stabil gelagert ist und daß auf einer Antriebsbuchse (24) ein Antriebszahnrad (40) kraftschlüssig
    angeordnet sowie über ein Zahnrad (38) befestigt auf
    einer Welle (39) in einem Getriebegehäuse (37) durch
    eine Lagerbuchse (19) aus dem Flüssigkeitsbehälter
    herausgeführt ist.

9.  Motor nach Anspruch 1 bis 8, dadurch gekennzeichnet,
    daß die Zuflußleitung (2) und die Rücklaufleitung
    (27) für das Auftriebsgas durch den Trägerbolzen (1)
    zu einer Zuflußkammer (6) bzw. einer Rückflußkammer

                                                    /22

(6 a) geführt sind.

10. Motor nach Anspruch 1 bis 9, dadurch gekennzeichnet, daß zwischen einem Flansch (8 a) bzw. einem Verschlußdeckel (28) einerseits und Stirnseiten der Nabe (4) Flächendichtringe (11) angebracht sind.

11. Motor nach Anspruch 1 bis 10, dadurch gekennzeichnet, daß die Rücklaufleitung (27) im Bereich des Flüssigkeitsbehälters (16) als Kühlschlange (27 a) ausgebildet ist.

12. Motor nach Anspruch 1 bis 11, dadurch gekennzeichnet, daß in die Rücklaufleitung (27) eine Pumpe (31) und vor dem Eintreten der Rücklaufleitung in die Aufwärmkammer (34) gegebenenfalls ein Rückschlagventil (33) eingebaut ist.

13. Motor nach Anspruch 1 bis 8 und 10 bis 12, dadurch gekennzeichnet, daß das Arbeitsgas seitlich durch in einem Verteilerflansch (49) liegende Verteilernuten (52) über in einem Verschlußdeckel (28) od. dgl. angeordnete Verbindungsbohrungen (51) den Hohlkörpern (7) od. dgl. zugeführt ist.

14. Motor nach Anspruch 1 bis 13, dadurch gekennzeichnet, daß die mit Antriebsgas füllbaren Hohlkörper im wesentlichen von einer Kammermanschette (10) gebildet sind, die radial durch je eine zylinderförmige Innen- und Außenwand begrenzt und in Umfangsrichtung mittels Zwischenwände (72) gebildeter Luftkammern (7), vorzugsweise von etwa gleichem Kammervolumen, gebildet ist, wobei diese Kammermanschette (10) dichtend auf der Nabe (4) aufgespannt ist und die einzelnen, im wesentlichen geschlossenen Kammern sich ra-

/23

dial vergrößern bzw. flachlegen können.

15. Motor nach Anspruch 1 bis 13, dadurch gekennzeichnet, daß Gaskammern (7 a) mittels in der Nabe (4) eingearbeiteter Lamellenführungen (46) und sich darin führender Lamellen (44) gebildet sind, die zwangsläufig zweckmäßigerweise über in den Stirnseiten der Lamellen angebrachte Mitnehmerstifte (43) geführt sind, wobei die Lamellen mittels in dem Verschlußdeckel (28) und dem Flansch (8 a) vorgesehener Mitnehmernuten (45) selbststeuernd nach innen oder außen bewegbar sind entsprechend der Bewegung des Auftriebskörpers (8).

16. Motor nach Anspruch 1 bis 13, dadurch gekennzeichnet, daß in der Nabe (4) umlaufend Zylinderbohrungen (48) angebracht sind, in welchen Kolben (47) axial verschiebbar geführt sind.

17. Motor nach Anspruch 1 bis 16, dadurch gekennzeichnet, daß auf einem Trägerbolzen (1) zwei oder mehrere getrennt gelagerte Naben (4) mit Auftriebskörpern (8) und dazwischen angebrachten Kammermanschetten (10) od. dgl. angebracht sind, wobei die Auftriebskörper (8) durch Mitnehmerkupplungen (53) kraftschlüssig verkoppelt sind.

18. Motor nach Anspruch 17, dadurch gekennzeichnet, daß die in Reihenanordnung (Fig. 7) angeordneten Gaskammern (7) in Umfangsrichtung zueinander v ersetzt sind.

19. Notor nach Anspruch 1 bis 9 und 11 bis 18, dadurch gekennzeichnet, daß zwischen dem Verschlußdeckel (28) und der Antriebsbuchse (24) sowie gegebenenfalls zwischen dem Flansch (8 a) und einem Nabenbund (4 a) eine Mitnehmermanschette (17) vorgesehen ist, die zweckmäßigerweise durch je einen Klemm- sowie einen Haltering (13, 20) befestigt sind.

20. Motor nach Anspruch 1 bis 3, dadurch gekennzeichnet, daß als Auftriebskörper (8) eine Bandmanschette (57) vorgesehen ist, die umlaufende Bandkammern (58) aufweist, welche durch Schlitze (63) mit Verteilerkammern (60) verbunden sind, die in die Zufluß- bzw. Rücklaufleitung (2 bzw. 27) münden, wobei die Bandmanschette auf einem Bandträger gelagert ist, welcher ein Antriebsrad (54) und ein Gegenrad (61) aufweist.

21. Motor nach Anspruch 1 bis 19, dadurch gekennzeichnet, daß der Umfangsbereich (C), innerhalb dessen die Gaskammern (7) mit der Zuflußleitung (2) in Verbindung stehen, größer ist als der Umfangsbereich (D), innerhalb dessen diese Gaskammern mit der Rückflußleitung (27) verbunden sind (Fig. 9).

22. Motor nach Anspruch 21, dadurch gekennzeichnet, daß sich die mit der Zulaufleitung (2) verbundene Zuflußkammer (106) über einen größeren Umfangswinkel (A) erstreckt als die Rückflußkammer (106 a), welche mit der Rückflußleitung (27) verbunden ist (Fig. 9).

23. Motor nach Anspruch 1 bis 22, dadurch gekennzeichnet, daß die einzelnen Gaskammern (7) von separaten Schlauchabschnitten (110) gebildet sind, die jeweils über eine oder mehrere Bohrungen (57 wechselweise mit der Zuflußkammer (106) bzw. der Rücklaufkammer (106 a) in Verbindung stehen.

24. Motor nach Anspruch 1 bis 23, dadurch gekennzeichnet, daß sein Auftriebsgas in einem geschlossenen Kreislauf strömt und Mittel zum Aufrechterhalten der Strömung (Pumpe 31; unterschiedliche Anzahl von Gaskammern (7) gemäß Fig. 9) vorgesehen sind.

25. Motor nach Anspruch 1 bis 23, dadurch gekennzeichnet, daß er bezüglich des Auftriebsgases mit einem offenen Kreislauf arbeitet, wobei gegebenenfalls am Einlaß der Aufwärmkammer (34) eine Pumpe (31) und gegebenenfalls ein Rückschlagventil (33) vorgesehen sind.

Fig.1

1/7

0088829

# Fig. 2

0088829

_Fig. 3_

**Fig.4**

**Fig.5**

## Fig. 6

## Fig. 7

Fig. 8

_Fig. 9_